# EUROPEAN PATENT SPECIFICATION

(11) **EP 1 819 241 B1**
(45) Date of publication and mention of the grant of the patent: **30.04.2014**
(21) Application number: 05815288.5
(22) Date of filing: 18.11.2005
(51) Int. Cl.: A23L 1/305, A23L 2/52, A23F 3/16, A23F 3/30

(54) **FOOD OR BEVERAGE PRODUCT COMPRISING THEANINE AND CAFFEINE FOR ENHANCING MENTAL ALERTNESS**
LEBENSMITTEL ODER GETRÄNK MIT THEANIN UND KOFFEIN ZUR VERBESSERUNG DER GEISTIGEN AUFMERKSAMKEIT
ALIMENT OU BOISSON AVEC THÉANINE ET CAFÉINE POUR AMÉLIORER L'ATTENTION MENTALE

(30) Priority: 08.12.2004 EP 04257634
(43) Date of publication of application: 22.08.2007
(60) Divisional application: 09166324.5
(73) Proprietor: Unilever PLC, London EC4Y 0DY (GB); Unilever N.V., 3013 AL Rotterdam (NL)
(72) Inventor: OWEN, Gail Nicola, Bedford Bedfordshire MK44 1LQ (GB); RYCROFT, Jane, Bedford Bedfordshire MK44 1LQ (GB); SCHOLEY, Andrew Belton, Heaton, Newcastle upon Tyne, NE6 5AT (GB); SCOTT, David Stephen, London W1U 6BW (GB)
(74) Representative: Askew, Sarah Elizabeth
(86) International application number: PCT/EP2005/012464
(87) International publication number: WO 2006/061097

(56) References cited:
- WO-A-95/00038
- WO-A-95/18540
- WO-A-96/04801
- US-A- 5 501 866
- US-B1- 6 462 051
- BELITZ H-D: "Food Chemistry (Lehrbuch der Lebensmittelchemie)" 1999, SPRINGER VERLAG , BERLIN , XP002367260 page 888 - page 889

## Description

The present invention relates to a composition suitable for direct consumption which comprises a specific amount of theanine and caffeine, to provide enhanced mental alertness.

### BACKGROUND AND PRIOR ART

Food and beverage products which can enhance the mental and physical aspects of the human body are becoming increasingly popular. In particular, products which produce an enhanced state of mental acuity are especially commercially valuable.

Beverages which comprise ingredients providing a mental effect have been known for centuries. Of the modern day beverages tea and coffee are perhaps the best known. It is conventionally understood that it is the caffeine in these two drinks which provides this mental boost. However, it has been discovered that tea, in addition to containing caffeine, also contains other natural ingredients which have a mental effect.

Tea contains a complex combination of enzymes, biochemical intermediates and structural elements normally associated with plant growth and photosynthesis. There are also many natural substances that give tea its unique taste, astringency, aroma and colour. Many of these are produced by the oxidation reactions that occur during the so-called fermentation stage of black tea manufacture. Tea production has long been driven by traditional processing methods with only a fundamental understanding of the chemistry that is involved. In addition tea contains a natural source of the amino acid theanine. Theanine has been found to have numerous beneficial effects on the human body and mind.

However, currently this is only available in high quantities in a synthetic sun-theanine form. This is largely due to the fact that naturally occurring theanine only comprises about 1% of the extractable tea solids in tea plant material.

EP 1 393 726 (Taiyo, 2001) discloses a composition (e.g. a food or pharmaceutical) for improving mind-concentration which comprises theanine. It discloses compositions comprising from 0.00025 to 100 wt%, from 0.005 to 100 wt% and from 0.05 to 100 wt% theanine.

US 5,501,866 (Ito En, 1995) discloses a composition comprising caffeine and theanine, wherein the ratio of theanine to caffeine is from 10:1 to 500:1.

US 5,780,086 (P&G, 1996) discloses a green tea beverage which contains theanine and caffeine.

US 6,268,009 (P&G, 1999) discloses a green tea extract comprising theanine and caffeine and discloses one extract with 200 ppm theanine and 992 ppm caffeine.

A cup of black infused tea contains up to approximately 20 mg/100 g of theanine and 40 mg/100 g of caffeine. These translate to 0.02 and 0.04 wt% of the beverage, or 200 and 400 ppm.

The present inventors have discovered that particular amounts of caffeine and theanine give a surprising and synergistic mental effect.

### DETAILED DESCRIPTION OF THE INVENTION

### The composition

The composition is suitable for direct human consumption. It is therefore either a food or beverage product. Preferably it is a beverage, more preferably it is a tea-based beverage. However other product forms are possible, such as confectionery, snack bars, chewing gums, ice cream etc.

Beverages of the invention may be still or carbonated. Carbonation appears to provide a preservative effect in itself and therefore the formulation of a carbonated product need not be the same as a still one. The partially dissolved carbon dioxide may impair cell wall growth.

Beverages according to the present invention are formulated in the usual way, except for the levels of caffeine and theanine.

The term "tea based beverage" describes a beverage that contains the solid extracts of leaf material from *Camellia sinensis, Camellia assamica*, or *Aspalathus linearis*. The leaves may have subjected to a so-called "fermentation" step wherein they are oxidised by certain endogenous enzymes that are released during the early stages of "black tea" manufacture. This oxidation may even be supplemented by the action of exogenous enzymes such as oxidases, laccases and peroxidases. Alternatively the leaves may have been partially fermented ("oolong" tea) or substantially unfermented ("green tea"). The tea may be added to the beverage in various forms including an extract, a concentrate, a powder or as granules.

Adding tea to media often increases the risk of microbial spoilage. This is probably because tea provides nutrients for microbial growth. Most microbes that can typically grow in tea based beverages thrive on sugar, a source of nitrogen, oxygen, zinc, magnesium, potassium, phosphate and vitamins. It is therefore advantageous to limit the sugar content to 8 to 10 degrees brix, however one could use up to 60 degrees brix when the product is a tea mix. Oxygen content can be minimised by pre-pasteurisation or some heat treatment or nitrogen sparging. The mineral content of a tea based beverage can be minimised using EDTA, citrate, or a water softener. For example microbes can grow in tea if the concentration of magnesium ions exceeds 0.2 ppm, and they only need trace levels of zinc. One must be careful using citrate for this purpose as it can affect taste.

At low concentrations, such as 0.1 to 3%, tea acts as a nutrient that enhances the potential for microbial spoilage. This is unexpected given the known antibacterial and antiviral properties of tea. It is not until one exceeds a concentration of 3% that tea begins to suppress the growth of yeasts and moulds.

Water quality can seriously undermine the stability of a beverage. This is an important factor when making a tea based beverage for cold filing. For that purpose it will often be important to minimise the yeast content of water used at all stages of production. Methods known in the art include chlorination/dechlorination and UV irradiation.

Weak acid acidulants have a slight if any effect as weak acid preservatives due to their being unable to penetrate microbial cells. Their concentration is generally referred to in terms of their titratable acidity in citric acid equivalents (in g/l). Tea based beverages routinely contain 1 to 4 g/l titratable acidity. The pH of such beverages tend to fall between pH 2.5 and pH 4.2. Spoilage yeasts can grow down to pH 2.0 while mould spores can typically grow down to pH 1.6.

At a pH such as 3.0 where there is no antimicrobial effect by pH per se, against spoilage yeasts or moulds, adding 100 ppm cinnamic acid will completely extinguish growth. This amount of cinnamic acid at neutral pH is entirely without effect thus demonstrating a substantial synergy between cinnamic acid and low pH.

The preservative and flavouring system of the present invention can optionally include other preservatives. Weak acid preservatives are preferred for this purpose. Alternatively one might envisage using cinnamic acid at low pH, as a supplement for existing weak acid preservatives. From either perspective, traditional weak-acid preservatives function by making cells of microorganisms acidic, i.e. lowering the internal pH, pHᵢ. In solution, the undissociated weak acids are able to dissolve in the membranes of microorganisms and pass inside cells. Charged, dissociated ions cannot enter cells because their charge prevents them dissolving in the lipid membrane. Once inside the cell, the undissociated weak acid molecules arrive in a region of much higher pH (6.5-7.0) and immediately revert to becoming the charged dissociated ionic form. This also releases protons, H⁺, and so lowers the internal pH.

Continuous release of protons increases the H⁺ ion concentration and causes the internal pH to drop to levels at which the cellular enzymes cease to function. The movement of weak acid into cells also removes protons from the medium and causes the outside pH to rise. Eventually the pH inside and outside will be the same and the flow of weak acid into the cell will stop.

To have maximum effect, weak acid preservatives work best in acidic media, where there is much more undissociated acid able to enter cells, and enabling the internal pH of cells to be pushed lower before weak acid transport stops.

Weak acid preservatives include sorbic acid, benzoic acid, sulphite, acetic acid, propionic acid and parabenz. At low concentrations they typically have a slight if any effect as acidulants on beverage pH but can have a major antimicrobial effect. Different weak acids tend to have different pKₐ values, e.g. sorbic acid has at pKₐ of 4.76, and sulphite has a pKₐ of 1.88. This means that at pH 4.76 there will be 50% sorbic acid and 50% sorbate ions. At a higher pH than this, there will be more sorbate and less undissociated acid, e.g. at pH 6.5 there will be 2% sorbic acid and 98% sorbate.

In the preservative and flavouring system of the invention the appropriate choice and concentration of a weak acid preservative will depend on the pKₐ of the weak acid and the pH of the final product. The combination of cinnamic acid and benzoic acid is favoured when the pH of the tea based beverage is less than pH 3.0. Whereas the combination of cinnamic acid and sorbic acid is favoured when the pH of the tea based beverage is less than pH 3.4.

The stability of the preservative and flavouring system relies upon being able to maintain the pH of the beverage below the pH 4.5. Generally speaking any means known in the art for adjusting and maintaining the pH of the tea based beverage can be used.

### Theanine and Caffeine content

Products according to the present invention contain from 300 to 3000 ppm theanine and from 200 to 2000 ppm caffeine. In addition the ratio of theanine to caffeine is from 5:1 to 1:1.5.

We have found that administering such a composition to an individual can result in a noticeable improvement in the concentration, mental focus and/or alertness of the individual. This is the case even in individuals who are not mentally and/or physically fatigued prior to administration. Thus, although the composition may optionally contain additional agents (such as the amino acid arginine) known to relieve stress in mentally and/or physically fatigued individuals, in a preferred embodiment the composition is substantially free of such agents. In particular it is preferred that the composition comprises less than 100 ppm, more preferably less than 50 ppm, even more preferably less than 10 ppm and optimally less than 1 ppm of arginine.

Preferably the ratio of theanine to caffeine is from 4:1 to 1:1.5, more preferably from 3:1 to 1:1.

The level of theanine can be from 400 to 2000 ppm, preferably from 600 to 1500 ppm. The level of caffeine can be from 300 to 1500, preferably from 400 to 1000 ppm.

The relative concentration of theanine and caffeine are important. However it is also important that a specific amount of theanine and caffeine are delivered to the human consumer in order to realise the benefit of the invention. In this respect a composition which is capable of delivering (a) from 40 to 500 mg theanine, (b) from 30 to 400 mg caffeine to a human via the mouth and has a mass of less than 500 g is suitable. Preferably it delivers from 80 to 400 mg theanine. Preferably it delivers from 60 to 300 mg caffeine.

### EXAMPLES

### Example 1

### Beverages

A placebo beverage was made up with a composition identical to that of a commercially available sugar-free ready to drink tea-based beverage (Lipton^{™} Peach Lite Ice Tea) except that the tea solids were excluded from the formulation. Theanine (Suntheanine^{™} which is 99% L-theanine and is available from the Taiyo Corporation) and/or caffeine (pharmaceutical grade) was then added to the inert placebo to provide three test beverages containing (per 250 ml serving) either 150 mg caffeine, 250 mg theanine or 150 mg caffeine and 250 mg theanine. These amounts correspond to concentrations of approximately 600 ppm caffeine, 1000 ppm theanine, or 600 ppm caffeine and 1000 ppm theanine respectively.

### Word recognition

A group of people took part in a word recognition test. The test ran over four days, each day involving a different one of the beverages described above. A series of 15 words were shown to each subject, one word at a time on a computer screen. About 20 minutes later, the subject was again shown the series of words randomly mixed up with 15 new words. The subject had to press either a 'YES' or 'NO' button on the keyboard to indicate which words they recognise from the first list. The test was performed before the beverage was ingested (t=0) and again 30 and 90 min after ingestion. The mean over all the subjects of the time taken to respond (Δt) relative to time=0 is shown in Table 1.

**TABLE 1**

| **Beverage** | **Δt (ms)** | | |
|---|---|---|---|
| | **time = 0** | **time = 30 min** | **time = 90 min** |
| Placebo | 0 | + 2.8 | - 6.5 |
| 150mg caffeine | 0 | + 0.4 | -13.1 |
| 250mg theanine | 0 | + 9.0 | +20.7 |
| 150mg caffeine + 250mg theanine | 0 | -69.7 | -77.1 |

It can be seen that the combination of a high amount of theanine and caffeine in a ratio of approximately 1.7:1 gives a surprising and synergistic benefit compared to when they are used alone.

### Alertness

Alertness was measured using the Bond-Lader mood questionnaire. The questionnaire comprises 16 visual analogue scales that are anchored at either end with one word from antonym pairs such as alert-drowsy, calm-excited. Scores from the individual items are combined using a formula to produce scores for 3 mood factors: alert, calm and contented. The test was performed before the beverage was ingested (time=0) and again 30 and 90 min after ingestion. The mean over all of the subjects of the difference in score (Δs) relative to t=0 is shown in Table 2.

**TABLE 2**

| **Beverage** | **Δs** | | |
|---|---|---|---|
| | **time = 0** | **time = 30 min** | **time = 90 min** |
| Placebo | 0 | -4.6 | -5.8 |
| 150mg caffeine | 0 | -0.2 | -0.5 |
| 250mg theanine | 0 | -3.6 | -3.8 |
| 150mg caffeine + 250mg theanine | 0 | +5.9 | +3.7 |

Again it can be seen that there is a surprising and synergistic benefit of the combination of high levels of theanine and caffeine in a ratio of approximately 1.7:1.

### Example 2

### Beverages

A placebo beverage was made up with a composition identical to that of a commercially available sugar-free ready to drink tea-based beverage (Lipton^{™} Peach Lite Ice Tea) except that the tea solids were excluded from the formulation. Theanine (Suntheanine^{™} which is 99% L-theanine and is available from the Taiyo Corporation) and/or caffeine (pharmaceutical grade) was then added to the inert placebo to provide three test beverages containing (per 250 ml serving) either 50 mg caffeine, 50 mg theanine, 50 mg caffeine and 50 mg theanine, 250 mg caffeine, 250 mg theanine, or 250 mg theanine and 250 mg caffeine. These amounts correspond to concentrations of approximately 200 ppm caffeine, 200 ppm theanine, 200 ppm caffeine and 200 ppm theanine, 1000 ppm caffeine, 1000 ppm theanine, or 1000 ppm caffeine and 1000 ppm theanine respectively.

Each beverage was tested for its effect on simple reaction time, choice reaction time and rapid visual information processing.

### Simple Reaction Time (SRT)

The subject presses the space bar every time an asterix appears on the computer screen. The interval between appearances is random. The mean over all subjects of the change in response time (ΔSRT) 48 min after drink ingestion from the response time immediately before ingestion was calculated for each beverage.

### Choice Reaction Time (CRT)

A random series of letters (either G or B) appears on the computer screen in either red or green font. Subjects must respond only to a red B (by pressing the space bar). The mean over all subjects of the change in response time (ΔCRT) 38 min after drink ingestion from the response time immediately before ingestion was calculated for each beverage.

### Rapid visual information processing (RVIP)

43 minutes following ingestion of the beverage, each subject monitored a continuous stream of digits for targets of 3 consecutive odd or even numbers. The digits were presented at a rate of 100 per minute and the task duration was 5 minutes with 8 correct strings presented every 60 seconds. The mean over all subjects of the number correct (RVIP) was calculated for each beverage.

### Results

The results of the three studies described above are presented in Table 3.

**TABLE 3**

| **Beverage** | **ΔSRT (ms)** | | **ΔCRT (ms)** | | **RVIP (number correct)** | |
|---|---|---|---|---|---|---|
| | **Mean** | **SE** | **Mean** | **SE** | **Mean** | **SE** |
| Placebo | 33.0 | 7.0 | 4.6 | 4.3 | 5.77 | 0.22 |
| 50mg caffeine | 24.0 | 7.6 | 4.4 | 5.6 | 6.15 | 0.22 |
| 50mg theanine | 33.7 | 7.6 | 14.1 | 5.3 | 5.83 | 0.23 |
| 50mg caffeine + 50mg theanine | 18.3* | 6.9 | 0.5 | 4.3 | 6.14 | 0.25 |
| 250mg caffeine | 17.3* | 7.0 | -0.7 | 4.7 | 6.18* | 0.20 |
| 250mg theanine | 32.2 | 5.2 | -0.2 | 5.8 | 5.78 | 0.28 |
| 250mg caffeine + 250mg theanine | 9.9* | 4.2 | -12.9* | 4.1 | 6.25* | 0.20 |

| | | | | | | |
|---|---|---|---|---|---|---|
| * Significantly different from placebo. | | | | | | |

As can be seen, while a 1:1 ratio of theanine to caffeine produces a significant improvement in SRT compared with the placebo at both the lower (50 mg) and higher (250 mg) levels, only the beverage containing the higher level (250 mg) of both theanine and caffeine produces a significant improvement in all three indications (SRT, CRT and RVIP).

### Example 3

### Beverages

A placebo and two test beverages were made up according to the formulations given in Table 4. The two test beverages contained 50 mg caffeine, or 50 mg caffeine and 100 mg theanine per serving (250 ml).

**TABLE 4**

| **Ingredient** | **Placebo** | **50 mg Caffeine** | **50 mg Caffeine + 100 mg Theanine** |
|---|---|---|---|
| Malic acid (g/l) | 1.60 | --- | --- |
| Flavouring (g/l) | 1.40 | 1.40 | 1.40 |
| Aspartame (g/l) | 0.22 | --- | --- |
| Trisodium citrate (g/l) | 0.20 | 0.20 | 0.20 |
| Ascorbic acid (g/l) | 0.20 | 0.20 | 0.20 |
| Acesulphame-K (g/l) | 0.07 | --- | --- |
| Sucrose (g/l) | --- | 58.00 | 58.00 |
| Maltodextrin (g/l) | --- | 5.00 | 5.00 |
| Citric acid (g/l) | --- | 1.60 | 1.60 |
| Green tea extract (g/l) | --- | 0.95 | 0.95 |
| Black tea extract (g/l) | --- | 0.45 | 0.45 |
| Caffeine -pharmaceutical grade (g/l) | --- | 0.14 | 0.14 |
| Suntheanine™ (g/l) | --- | --- | 0.40 |
| Water | Balance | Balance | Balance |
| | | | |
| TOTAL THEANINE* (ppm) | 0 | 0 | 400 |
| TOTAL CAFFEINE* (ppm) | 0 | 200 | 200 |

| | | | |
|---|---|---|---|
| * including contribution from tea extracts. | | | |

Each beverage was tested for its effect on word recognition and attention switching.

### Word Recognition

27 people were each shown 15 words presented one at a time on a computer screen for 1 second each. After approximately 20 minutes, these original words (old words) plus 15 distractor words (new words) were presented one at time in randomised order. For each word the participant had to indicate whether it was in the original list by pressing a designated key as quickly as possible. The duration of picture presentation was 30 seconds and the duration of the recognition test was 1 minute. The test was performed before each beverage was ingested (t=0) and again 60 and 90 min after ingestion. The mean over all the subjects of the correct number of responses (Δw) relative to time=0 is shown in Table 5.

**TABLE 5**

| **Beverage** | **Δw (number correct)** | |
|---|---|---|
| | **Mean (SE)** | |
| | **time = 60 min** | **time = 90 min** |
| Placebo | -1.31 (0.43) | -1.09 (0.45) |
| Caffeine (50 mg) | -1.08 (0.43) | -1.12 (0.44) |
| Theanine (100 mg) + Caffeine (50 mg) | -0.12* (0.43) | +0.12* (0.45) |

| | | |
|---|---|---|
| * significantly different from placebo. | | |

As can be seen, only the beverage containing both theanine and caffeine demonstrated a significant improvement over that of the placebo.

### Attention Switching

27 people took part in a task which measured sustained attention and executive function. Participants were presented with a letter and a number on screen simultaneously, either in red or purple. When they appear in red, the subject attended to the letter and pressed the space bar only if it was a vowel. When in purple, subjects responded similarly only if the number was even. The colour alternated every 4th stimulus. The test duration was 5 minutes. The average response time (Δt) of correct responses relative to time = 0, and the number of correct responses (Δn) relative to time = 0 are shown in Tables 6 and 7.

**TABLE 6**

| **Beverage** | **Δt (ms)** | |
|---|---|---|
| | **Mean (SE)** | |
| | **time = 60 min** | **time = 90 min** |
| Placebo | -13.5 (8.02) | -26.9 (8.40) |
| Caffeine (50mg) | -25.3 (7.98) | -26.2 (8.36) |
| Theanine (100mg) + Caffeine (50mg) | -34.1* (7.94) | -33.4 (8.32) |

| | | |
|---|---|---|
| * significantly different from placebo. | | |

**TABLE 7**

| **Condition** | **Δn (number correct)** | |
|---|---|---|
| | **Mean (SE)** | |
| | **60 min** | **90 min** |
| Placebo | 3.8 (0.85) | 0.2 (0.83) |
| Caffeine (50mg) | 1.1 (0.85) | 6.5* (0.83) |
| Theanine (100mg) + Caffeine (50mg) | 7.7* (0.83) | 2.8 (0.81) |

| | | |
|---|---|---|
| * significantly different from placebo. | | |

As can be seen, only the beverage containing both theanine and caffeine demonstrated a significant improvement over that of the placebo 60 minutes after ingestion. After 90 minutes, however, only the beverage containing caffeine showed an improvement over the placebo, but only in terms of the number of correct responses and not in terms of reaction time.

## Claims

1. A composition suitable for direct consumption and delivering its functional benefit via the human mouth which comprises:
(a) from 300 to 3000 ppm theanine; and
(b) from 200 to 2000 ppm caffeine;
and in which the ratio of theanine to caffeine is from 5:1 to 1:1.5.

2. A composition according to claim 1, which is a beverage, preferably a tea-based beverage.

3. A composition according to any preceding claim, wherein the amount of theanine is from 400 to 2000 ppm.

4. A composition according to any preceding claim, wherein the amount of theanine is from 600 to 1500 ppm.

5. A composition according to any preceding claim, wherein the amount of caffeine is from 300 to 1500 ppm.

6. A composition according to any preceding claim, wherein the amount of caffeine is from 400 to 1000 ppm.

7. A composition according to any preceding claim, wherein the ratio of theanine to caffeine is from 4:1 to 1:1.5.

8. A composition according to claim 7, wherein the ratio of theanine to caffeine is from 3:1 to 1:1.

9. A composition according to any one of the preceding claims and which is capable of delivering (a) from 40 to 500 mg theanine, (b) from 30 to 400 mg caffeine to a human via the mouth and has a mass of less than 500 g.

10. Use of a composition according to any one of the preceding claims for giving a noticeable improvement in concentration, mental focus and/or alertness.

11. A method of improving the concentration, mental focus and/or alertness of an individual comprising orally administering to the individual a composition according to any one of claims 1 to 9.

## Patentansprüche

1. Zusammensetzung, die für den direkten Verzehr und die Lieferung ihrer funktionellen Vorteile über den Mund des Menschen geeignet ist,
die Folgendes aufweist:
a) 300 bis 3000 ppm Theanin und
b) 200 bis 2000 ppm Koffein;
wobei das Verhältnis zwischen Theanin und Koffein 5:1 bis 1:1,5 beträgt.

2. Zusammensetzung nach Anspruch 1,
die ein Getränk, vorzugsweise ein Getränk auf Teebasis ist.

3. Zusammensetzung nach einem der vorstehenden Ansprüche,
wobei die Theaninmenge 400 bis 2000 ppm beträgt.

4. Zusammensetzung nach einem der vorstehenden Ansprüche,
wobei die Theaninmenge 600 bis 1500 ppm beträgt.

5. Zusammensetzung nach einem der vorstehenden Ansprüche,
wobei die Koffeinmenge 300 bis 1500 ppm beträgt.

6. Zusammensetzung nach einem der vorstehenden Ansprüche,
wobei die Koffeinmenge 400 bis 1000 ppm beträgt.

7. Zusammensetzung nach einem der vorstehenden Ansprüche,
wobei das Verhältnis zwischen Theanin und Koffein 4:1 bis 1:1,5 beträgt.

8. Zusammensetzung nach einem der vorstehenden Ansprüche,
wobei das Verhältnis zwischen Theanin und Koffein 3:1 bis 1:1 1 beträgt.

9. Zusammensetzung nach einem der vorstehenden Ansprüche,
die einem Menschen über den Mund (a) 40 bis 500 mg Theanin und (b) 30 bis 400 mg Koffein zuführen kann und eine Masse von weniger als 500 g aufweist.

10. Verwendung einer Zusammensetzung nach einem der vorstehenden Ansprüche, um eine spürbare Verbesserung bei der Konzentration, dem mentalen Fokus und/oder der Wachsamkeit zu verleihen.

11. Verfahren zum Verbessern der Konzentration, des mentalen Fokus und/oder der Wachsamkeit einer Person, das die orale Verabreichung einer Zusammensetzung nach einem der Ansprüche 1 bis 9 an die Person aufweist.

## Revendications

1. Composition appropriée pour la consommation directe et délivrant son bénéfice fonctionnel par la voie buccale humaine, qui comprend :
(a) de 300 à 3000 ppm de théanine ; et
(b) de 200 à 2000 ppm de caféine ;
et dans laquelle le rapport de la théanine à la caféine est de 5 :1 à 1 :1,5.

2. Composition selon la revendication 1, qui est une boisson, de préférence, une boisson à base de thé.

3. Composition selon l'une quelconque des revendications précédentes, dans laquelle la quantité de théanine est de 400 à 2000 ppm.

4. Composition selon l'une quelconque des revendications précédentes, dans laquelle la quantité de théanine est de 600 à 1500 ppm.

5. Composition selon l'une quelconque des revendications précédentes, dans laquelle la quantité de caféine est de 300 à 1500 ppm.

6. Composition selon l'une quelconque des revendications précédentes, dans laquelle la quantité de caféine est de 400 à 1000 ppm.

7. Composition selon l'une quelconque des revendications précédentes, dans laquelle le rapport de la théanine à la caféine est de 4 :1 à 1 :1,5.

8. Composition selon la revendication 7, dans laquelle le rapport de la théanine à la caféine est de 3 : 1 à 1 : 1.

9. Composition selon l'une quelconque des revendications précédentes et qui est capable de délivrer (a) de 40 à 500 mg de théanine, (b) de 30 à 400 mg de caféine à un être humain par voie buccale et a une masse inférieure à 500 g.

10. Utilisation d'une composition selon l'une quelconque des revendications précédentes pour donner une amélioration notable de la concentration, de la focalisation mentale et/ou de la vigilance.

11. Procédé d'amélioration de la concentration, de la focalisation mentale et/ou de la vigilance d'un individu, comprenant l'administration orale à l'individu d'une composition selon l'une quelconque des revendications 1 à 9.
